# EUROPÄISCHE PATENTSCHRIFT

(11) **EP 1 674 801 B1**
(45) Veröffentlichungstag und Bekanntmachung des Hinweises auf die Patenterteilung: **23.05.2018**
(21) Anmeldenummer: 05027302.8
(22) Anmeldetag: 14.12.2005
(51) Int. Cl.: F24F 5/00, F24D 3/14

(54) **Klimaelement**
Air conditioning element
Elément de climatisation

(30) Priorität: 22.12.2004 DE 102004062916
(43) Veröffentlichungstag der Anmeldung: 28.06.2006
(73) Patentinhaber: Kälberer, Stefan, 73344 Gruibingen (DE)
(72) Erfinder: Kälberer, Stefan, 73344 Gruibingen (DE)
(74) Vertreter: Jackisch-Kohl, Anna-Katharina

(56) Entgegenhaltungen:
- WO-A-03/093732
- WO-A-2004/020913
- DE-A1- 10 019 315
- DE-A1- 19 608 255
- DE-C1- 10 015 581
- JP-A- 7 133 939

## Beschreibung

Die Erfindung betrifft ein Klimaelement nach dem Oberbegriff des Anspruches 1.

Zur Klimatisierung von Räumen sind Heiz/Kühlflächen, Klimakonvektoren und Induktionsgeräte im Boden, in der Wand und an der Decke bekannt. Kühlflächen werden mit Wassertemperaturen betrieben, die gewährleisten, daß der Taupunkt der Raumluft nicht unterschritten wird.

Induktionsgeräte und Klimakonvektoren haben einen Wärmetauscher, durch den auf der Luftseite Raumluft abgekühlt und anschließend wieder dem Raum zugeführt wird. Klimakonvektoren und Induktionsgeräte können auch mit Wassertemperaturen betrieben werden, bei denen aus der umgewälzten Raumluft Kondensat ausfällt. Es wird in einer Kondensatorwanne aufgefangen.

Die Kühlflächen haben den Vorteil der sogenannten stillen Kühlung, bei der im zu klimatisierenden Raum keine Zugerscheinungen auftreten, die durch zum Beispiel kalte Zuluft verursacht werden. Vielmehr wird die Kälte oder Wärme in den Raum abgestrahlt. Der Nachteil der Heiz/Kühlflächen besteht in der begrenzten Kälteleistung, da sie immer im kondensatfreien Betrieb betrieben werden und somit tiefe Wassertemperaturen nicht möglich sind.

Induktionsgeräte und Klimakonvektoren haben den Vorteil, daß aufgrund der niedrigen Wassertemperaturen und der großen Luftströme hohe Kälteleistungen erzielt werden können. Dafür fällt jedoch Kondensat an, das aufgefangen werden muß. Außerdem treten Zugerscheinungen auf, die durch die Luftgeschwindigkeit und die niedrige Temperatur der Zuluft auftreten können.

Aus der DE 196 08 255 A1 ist es bekannt, zwei unabhängig voneinander arbeitende Klimageräte in Form von Heizkörpern hintereinander anzuordnen und durch getrennte Leitungen zu beaufschlagen. Der eine Heizkörper ist mit einem Wärmeleitelement versehen, das aus Schamottesteinen bestehen kann und das einzelne Rohre eines flächigen Rohrleitsystems aufnimmt.

Der Erfindung liegt die Aufgabe zugrunde, das gattungsgemäße Klimaelement so auszubilden, daß eine hohe Leistung bei geringen Zugerscheinungen möglich ist.

Diese Aufgabe wird beim gattungsgemäßen Klimaelement erfindungsgemäß mit den kennzeichnenden Merkmalen des Anspruches 1 gelöst.

Beim erfindungsgemäßen Klimaelement wird die Lufterwärmung/-abkühlung mit der Erwärmung bzw. Abkühlung einer Heiz/Kühlfläche kombiniert. Der Wärmetauscher kann mit niedrigen Temperaturen betrieben werden, während das Wärmeleitelement als Heiz/Kühlfläche für eine zugfreie Erwärmung bzw. Abkühlung des Raumes dient. Das Klimagerät hat mindestens einen Wärmetauscher, der von einem Medium durchströmt wird. Zwischen dem Wärmetauscher und dem Abstrahlelement strömt Wärme/Kälte aufnehmende Raumluft. Das Wärmeleitelement steht mit dem Abstrahlelement und dem Rohr in wärmeleitender Verbindung. Das Rohr wird vom Wärmeleitelement wenigstens teilweise übergriffen und ist an den Wärmetauscher angeschlossen. Das Wärmeleitelement ist vom Wärmetauscher thermisch entkoppelt und wird durch die Wärmeisolierung gehalten. Das Rohr ist wenigstens teilweise in die Wärmeisolierung eingebettet, die an der vom Abstrahlelement abgewandten Rückseite des Wärmeleitelementes vorgesehen ist.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in Vorderansicht und in perspektivischer Darstellung ein erfindungsgemäßes Klimaelement,
- Fig. 2: einen Schnitt längs der Linie A-B in Fig. 1 in vergrößerter Darstellung,
- Fig. 3: in Seitenansicht eine zweite Ausführungsform eines erfindungsgemäßen Klimaelementes,
- Fig. 4: in vergrößerter Darstellung einen Schnitt längs der Linie A-B in Fig. 3.

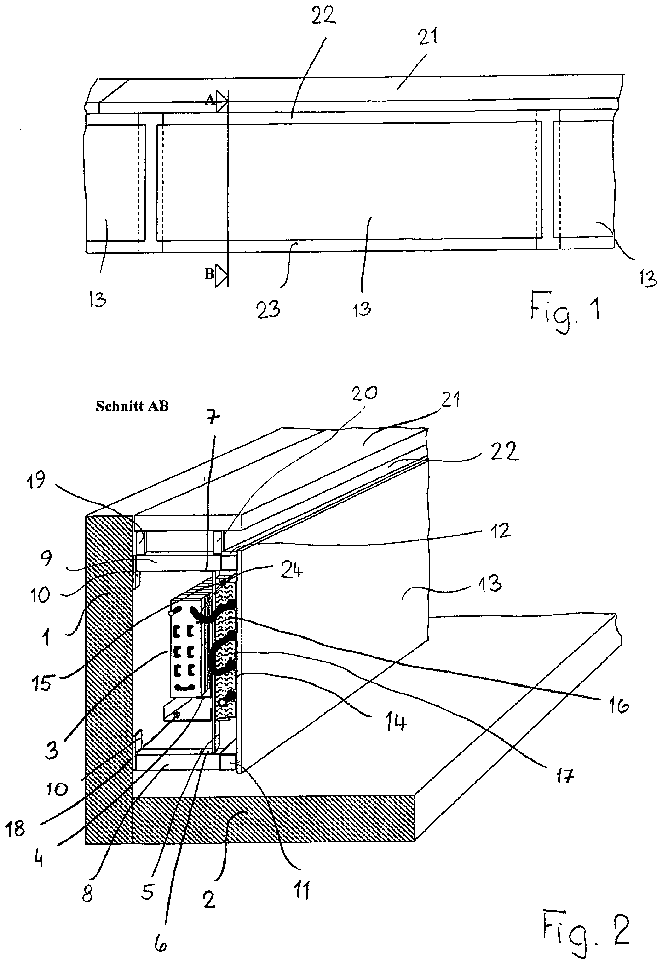

Das Klimaelement gemäß den Fig. 1 und 2 ist so ausgebildet, daß mit ihm eine Lufterwärmung bzw. Luftabkühlung bei gleichzeitiger Erwärmung bzw. Abkühlung einer Heiz- bzw. Kühlfläche in einer Wand erreicht wird. Im Ausführungsbeispiel ist das Klimaelement an der Innenseite einer Brüstung 1 angeordnet, die senkrecht zu einem Boden 2 liegt. Das Klimaelement ist in geeigneter Weise an der Innenseite der Brüstung 1 befestigt.

Das Klimaelement hat einen Wärmetauscher 3, der stehend angeordnet ist und auf einer Winkelschiene 4 als Träger aufliegt. Sie ist an Haltern 5 befestigt, von denen in Fig. 2 nur ein Halter zu erkennen ist. Die Halter 5 sind streifenförmig ausgebildet und mit unteren und oberen abgewinkelten Enden 6, 7 an Querträgern 8, 9 befestigt. Sie erstrecken sich bis zur Brüstung 1, an der sie mit Laschen 10 befestigt sind. Über die Länge des Klimaelementes sind mit Abstand mehrere solcher Querträger 8, 9 vorgesehen.

Die von der Brüstung 1 abgewandten Enden der Querträger 8, 9 schließen an einen Längsträger 11, 12 an, der jeweils als Viereckrohr ausgebildet ist. Die beiden Längsträger 11, 12 liegen parallel zueinander und sind im Bereich oberhalb und unterhalb des Wärmetauschers 3 angeordnet. Die Längsträger 11, 12 sind an einer Verkleidung 13 befestigt, die plattenförmig ausgebildet ist und mit ihrem unteren Rand Abstand vom Boden 2 hat. Die plattenförmige Verkleidung 13 erstreckt sich vom unteren zum oberen Längsträger 11, 12. An der der Brüstung 1 zugewandten Innenseite der Verkleidung 13 ist ein Wärmeleitblech 14 befestigt, das mit Abstand einem Halteblech 15 gegenüberliegt. Es ist an den vertikalen Haltern 5 befestigt. Der Zwischenraum zwischen dem Wärmeleitblech 14 und dem Halteblech 15 ist durch ein Isoliermaterial 16 gefüllt. In dieses Isoliermaterial 16 ist wenigstens ein mäanderförmig verlaufendes Rohr 17 eingebettet, das an den Wärmetauscher 3 mit einem Ende angeschlossen ist.

An der von der Verkleidung 13 abgewandten Seite der Halter 5 ist eine Tropfwanne 18 befestigt, die mit Abstand unterhalb des Wärmetauschers 3 liegt und sich über dessen Breite und Länge erstreckt.

Auf den oberen Querträgern 9 ist mit senkrecht abstehenden Laschen 19, 20 eine plattenförmige Abdeckung 21 befestigt, die sich von der Innenseite der Brüstung 1 aus bis in Höhe der Außenseite der Verkleidung 13 erstreckt. Aufgrund der Laschen 19, 20 liegt die Abdeckung 21 mit Abstand oberhalb der Verkleidung 13, so daß zwischen ihr und der senkrecht zu ihr liegenden Abdeckung 21 eine Lufteintrittsöffnung 22 gebildet wird. Da die Verkleidung 13 Abstand vom Boden 2 hat, wird zwischen dem unteren Rand der Verkleidung 13 und dem Boden 2 eine längliche Luftaustrittsöffnung 23 gebildet.

Die Raumluft tritt durch die obere Lufteintrittsöffnung 22 in das Klimaelement ein. Sie strömt am Wärmetauscher 3 vorbei und tritt in Höhe des Bodens 2 durch die Luftaustrittsöffnung 23 nach außen.

Der Wärmetauscher 3 wird im Kühlfall mit niedrigen Wassertemperaturen betrieben. Das dabei eventuell ausfallende Kondensat wird in der Tropfwanne 18 aufgefangen. Die durchströmende Raumluft kühlt sich am Wärmetauscher 3 ab und fällt über die Luftaustrittsöffnung 23 impulsarm in den zu kühlenden Raum. Das durch den Wärmetauscher 3 strömende Wasser mit der etwas höheren Temperatur strömt anschließend durch das Rohr 17, das vorteilhaft über einen flexiblen Verbindungsschlauch 24 mit dem Wärmetauscher 3 strömungsverbunden ist. Das Rohr 17 besteht aus gut wärmeleitendem Material, vorzugsweise aus Kupfer. Es ist in das Wärmeleitblech 14 vorzugsweise eingeclipst. Das kalte, das Rohr 17 durchströmende Medium kühlt das Wärmeleitblech 14, das seinerseits die Verkleidung 13 kühlt. Die Kälte wird somit auch von der Verkleidung 13 in den Raum abgegeben.

Das Wärmeleitblech 14 ist mit dem Wärmetauscher 3 vorteilhaft hydraulisch so verbunden, daß das Wärmeleitblech 14 ein höheres Temperaturniveau hat als der Wärmetauscher 3. Dadurch ist ein kondensatorfreier Betrieb möglich. Selbstverständlich können das Wärmeleitblech 14 und der Wärmetauscher 3 hydraulisch auch so verbunden werden, daß sie gleiches Temperaturniveau haben.

Die von der Verkleidung 13 abgewandte Rückseite des Wärmeleitbleches 14 ist durch die Isolierung 16 bedeckt. Auf diese Weise ist eine einwandfreie thermische Trennung zwischen dem Wärmeleitblech 14 und dem Wärmetauscher 3 gewährleistet. Als thermisches Trennungsmittel können auch Luft oder Luft und Isoliermaterial in Kombination eingesetzt werden.

Das Wärmeleitblech 14 und die Isolierung 16 überragen den parallel zu ihnen verlaufenden Wärmetauscher 3 nach oben und nach unten, so daß die beschriebene thermische Isolierung einwandfrei ist.

Mit dem Klimaelement ist auch eine Beheizung des Raumes möglich. In diesem Falle strömt durch den Wärmetauscher 3 ein erwärmtes Medium, das die Wärme an die am Wärmetauscher 3 vorbeiströmende Luft abgibt. Da das erwärmte Medium auch in das Rohr 17 strömt, wird das Wärmeleitblech 17 entsprechend erwärmt, so daß über die Verkleidung 13 die Wärme in den Raum zusätzlich abgestrahlt wird.

Das Rohr 17 verläuft vorteilhaft mäanderförmig, wobei die geradlinigen, horizontalen Abschnitte des Rohres 17 vom Wärmeleitblech 14 übergriffen werden. Die Isolierung 16 ist an ihrer der Verkleidung 13 zugewandten Seite mit Vertiefungen zur Aufnahme der Rohrabschnitte und der entsprechenden, die Rohrabschnitte übergreifenden Bereiche des Wärmeleitbleches 14 versehen. Das Wärmeleitblech 14 sowie das Rohr 17 werden durch die Isolierung 16 in montierter Lage gegen die Verkleidung 13 gedrückt. Die Isolierung 17 hält das Wärmeleitblech 14 und das Rohr 17, so daß diese nicht gesondert an der Verkleidung 13 befestigt werden müssen. Auf diese Weise sind das Wärmeleitblech 14 und das Rohr 17 mechanisch von der Verkleidung 13 entkoppelt, so daß nicht die Gefahr besteht, daß sich aufgrund der Temperaturänderungen und -spannungen Risse in der Verkleidung 13 bilden. Die Vertiefungen in der Isolierung 16 sind so ausgebildet, daß das Rohr 17 und das Wärmeleitblech 14 gegen die Verkleidung 13 gedrückt werden, so daß ein optimaler Wärmeübergang auf die Verkleidung 13 gewährleistet ist.

Beim dargestellten Ausführungsbeispiel ist das Klimaelement vor einem vertikalen Wandelement 1 angeordnet. Das Klimaelement kann aber auch im Bodenbereich angeordnet sein. Im Vergleich zur Lage gemäß Fig. 2 ist dann das Klimaelement um 90° gedreht angeordnet.

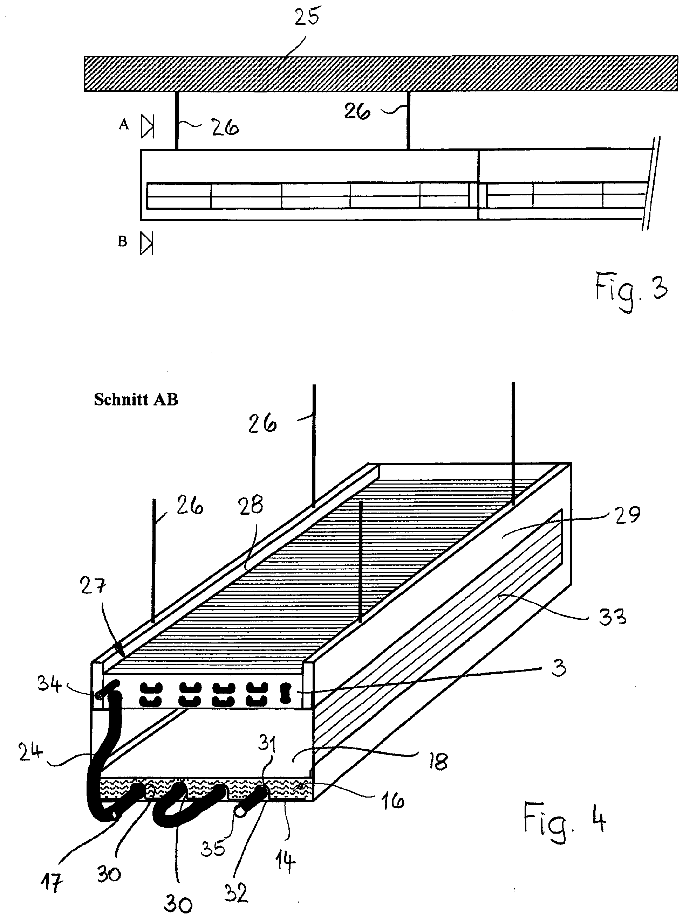

Die Fig. 3 und 4 zeigen die Verwendung des Klimaelementes im Deckenbereich. Das Klimaelement ist an einer Raumdecke 25 mit Tragteilen 26 aufgehängt. Der horizontal liegende Wärmetauscher 3 ist in einem Gehäuse 27 untergebracht, von dem wenigstens zwei einander gegenüberliegende Seitenwände 28, 29 den Wärmetauscher 3 überragen. An diesen Seitenwänden 28, 29 sind die Tragteile 26 befestigt.

Mit Abstand unterhalb des Wärmetauschers 3 befindet sich das Wärmeleitblech 14, das entsprechend der vorhergehenden Ausführungsform mit Abstand voneinander liegende, halbkreisförmige Profilierungen 30 aufweist, die die geradlinigen Abschnitte des mäanderförmig verlaufenden Rohres 17 übergreifen. Das Wärmeleitblech 14 und der größte Teil des Rohres 17 sind wie beim vorigen Ausführungsbeispiel im Isoliermaterial 16 eingebettet. Es hat die Aufnahmen 31 für die Profilierungen 30 des Wärmeleitbleches 14 und die geradlinigen Abschnitte des Rohres 17. Durch die Isolierung 16 wird das Wärmeleitblech 14 gegen einen Boden 32 des Gehäuses 27 gedrückt. Das Wärmeleitblech 14 und das Rohr 17 werden durch die Isolierung 16 gehalten, so daß eine zusätzliche Befestigung am Gehäuseboden 32 nicht erforderlich ist. Auf diese Weise ist das Wärmeleitblech 14 vom Gehäuseboden 32 mechanisch entkoppelt.

Ist das Isoliermaterial 16 nicht formsteif, sondern wird als Isolierung beispielsweise Luft verwendet, dann kann das Wärmeleitblech 14 auf den Gehäuseboden 32 beispielsweise so aufgeklebt werden, daß Relativverschiebungen zwischen dem Wärmeleitblech 14 und dem Gehäuseboden 32 möglich sind.

Die Isolierung 16 wird in Richtung auf den Wärmetauscher 3 von einer Tropfwanne 18 bedeckt, die sich zwischen den Seitenwänden 28, 29 des Gehäuses 27 erstreckt und eventuell anfallendes Kondensat des Wärmetauschers 3 auffängt.

Die Seitenwände 28, 29 des Gehäuses 27 sind im Bereich zwischen der Tropfwanne 18 und dem Wärmetauscher 3 mit Lüftungsschlitzen 33 versehen, die sich über den größten Teil der Länge der Gehäuseseitenwände 28, 29 erstrecken.

Die Raumluft tritt im Bereich zwischen der Decke 25 und dem Klimaelement von oben in den Wärmetauscher 3 ein und durchströmt ihn nach unten. Der Wärmetauscher 3 ist für den Durchtritt der Raumluft mit entsprechenden Schlitzen versehen, die sich zwischen den Gehäuseseitenwänden 28, 29 erstrecken. Die Raumluft gelangt in den Zwischenraum zwischen dem Wärmetauscher 3 und der Isolierung 16. An der auf der Isolierung 16 aufliegenden Tropfwanne 18 wird die Raumluft zu den seitlichen Lüftungsschlitzen 33 umgelenkt, durch die die Raumluft wieder in den Raum austritt.

Wie beim vorigen Ausführungsbeispiel ist das Rohr 17 über den vorzugsweise flexiblen Verbindungsschlauch 24 mit dem Wärmetauscher 3 leitungsverbunden. Das Medium tritt über den Einlaß 34 in den Wärmetauscher 3 ein. Wird das Klimaelement zum Heizen eingesetzt, durchströmt entsprechend erwärmtes Medium den Wärmetauscher 3. Die den Wärmetauscher 3 durchströmende Raumluft wird entsprechend erwärmt. Da der Wärmetauscher 3 mit dem Rohr 17 leitungsverbunden ist, strömt das warme Medium auch durch das Rohr 17. Das Wärmeleitblech 14 wird entsprechend aufgewärmt und gibt die Wärme an den Gehäuseboden 32 ab, der vorteilhaft aus gut wärmeleitendem Material besteht. Der Gehäuseboden 32 strahlt die Wärme in den Raum ab. Das Medium tritt über den Auslaß 35 aus dem Rohr 17 aus und kann wieder dem Einlaß 34 des Wärmetauschers 3 zugeführt werden. Auf diese Weise wird das Medium im Kreislauf geführt.

Das Klimaelement kann auch zum Kühlen des Raumes eingesetzt werden. In diesem Falle strömt kühles Medium durch den Wärmetauscher 3. Die ihn durchströmende Raumluft wird entsprechend abgekühlt und tritt durch die seitlichen Lüftungsschlitze 33 aus. Das Kühlmedium kühlt das Rohr 17, wodurch das Wärmeleitblech 14 entsprechend gekühlt wird. Die Kälte wird auf den Gehäuseboden 32 übertragen, der dann die entsprechende Kälte in den Raum abstrahlt.

Je nach Größe des zu klimatisierenden Raumes können zwei oder mehrere Klimaelemente aneinandergesetzt werden. Dadurch ist eine optimale Klimatisierung unterschiedlicher Raumgrößen ohne weiteres möglich. Das Klimaelement kann auch als Standgerät ausgebildet sein, das im zu klimatisierenden Raum an einer geeigneten Stelle aufgestellt werden kann.

Das Klimaelement kann auch Bestandteil einer Wand-, einer Decken- oder einer Bodenkonstruktion sein.

## Patentansprüche

1. Klimaelement mit mindestens einem Wärmetauscher (3), der von einem Medium durchströmt wird, mit wenigstens einem Abstrahlelement (13, 32), zwischen dem und dem Wärmetauscher (3) Wärme/Kälte aufnehmende Raumluft strömt, und mit wenigstens einem Wärmeleitelement (14), das mit dem Abstrahlelement (13, 32) und mindestens einem Rohr (17) in wärmeleitender Verbindung steht, das vom Wärmeleitelement (14) wenigstens teilweise übergriffen ist, das vom Wärmetauscher (3) thermisch entkoppelt ist,
**dadurch gekennzeichnet, dass** das Rohr (17) an den Wärmetauscher (3) angeschlossen ist und dass das Wärmeleitelement (14) durch eine Wärmeisolierung (16) gehalten ist, in die das Rohr (17) wenigstens teilweise eingebettet und die an der vom Abstrahlelement (13, 32) abgewandten Rückseite des Wärmeleitelementes (14) vorgesehen ist.

2. Klimaelement nach Anspruch 1,
**dadurch gekennzeichnet, dass** das Wärmeleitelement (14) das Rohr (17) gegen das Abstrahlelement (13, 32) drückt.

3. Klimaelement nach Anspruch 1 oder 2,
**dadurch gekennzeichnet, dass** das Rohr (17) mäanderförmig ausgebildet ist.

4. Klimaelement nach einem der Ansprüche 1 bis 3,
**dadurch gekennzeichnet, dass** das Abstrahlelement (13) eine Verkleidung des Klimaelementes ist.

5. Klimaelement nach einem der Ansprüche 1 bis 3,
**dadurch gekennzeichnet, dass** das Abstrahlelement (32) ein Boden eines Gehäuses (27) des Klimaelementes ist.

6. Klimaelement nach einem der Ansprüche 1 bis 5,
**dadurch gekennzeichnet, dass** unterhalb des Wärmetauschers (3) eine Tropfwanne (18) angeordnet ist.

7. Klimaelement nach einem der Ansprüche 1 bis 6,
**dadurch gekennzeichnet, dass** das Klimaelement an eine Wand (1) angehängt ist.

8. Klimaelement nach einem der Ansprüche 1 bis 6,
**dadurch gekennzeichnet, dass** das Klimaelement an einer Raumdecke (25) aufgehängt ist.

9. Klimaelement nach einem der Ansprüche 1 bis 6,
**dadurch gekennzeichnet, dass** das Klimaelement als Standelement ausgebildet ist.

10. Klimaelement nach einem der Ansprüche 1 bis 6,
**dadurch gekennzeichnet, dass** das Klimaelement im Boden des Raumes angeordnet ist.

11. Klimaelement nach einem der Ansprüche 1 bis 6,
**dadurch gekennzeichnet, dass** das Klimaelement Bestandteil einer Decken-, Wand- oder Bodenkonstruktion ist.

## Claims

1. An air conditioning element with at least one heat exchanger (3), through which a medium flows, with at least one emitting element (13, 32) between which and the heat exchanger (3) ambient air flows, which absorbs heat/cold, and with at least one heat-conducting element (14), which is in a heat-conducting connected with the emitting element (13, 32), and at least one pipe (17), which is at least partly overlapped by the heat-conducting element (14), which is thermally decoupled from the heat exchanger (3),
**characterized in that** the pipe (17) is connected to the heat exchanger (3) and that the heat-conducting element (14) is retained by a heat isolation (16), into which the pipe (17) is at least partially embedded and which is provided on the back side of the heat-conducting element (14) facing away from the emitting element (13, 32).

2. The air conditioning element according to Claim 1,
**characterized in that** the heat-conducting element (14) presses the pipe (17) against the emitting element (13, 32).

3. The air conditioning element according to Claim 1 or 2,
**characterized in that** the pipe (17) is meander-shaped.

4. The air conditioning element according to one of the Claims 1 to 3,
**characterized in that** the emitting element (13) is a covering of the air conditioning element.

5. The air conditioning element according to one of the Claims 1 to 3,
**characterized in that** the emitting element (32) is a floor of a housing (27) of the air conditioning element.

6. The air conditioning element according to one of the Claims 1 to 5,
**characterized in that** a drip pan (18) is arranged under the heat exchanger (3).

7. The air conditioning element according to one of the Claims 1 to 6,
**characterized in that** the air conditioning element is attached to a wall (1).

8. The air conditioning element according to one of the Claims 1 to 6,
**characterized in that** the air conditioning element is hung on a room ceiling (25).

9. The air conditioning element according to one of the Claims 1 to 6,
**characterized in that** the air conditioning element is designed as a standing element.

10. The air conditioning element according to one of the Claims 1 to 6,
**characterized in that** the air conditioning element is arranged in the floor of the room.

11. The air conditioning element according to one of the Claims 1 to 6,
**characterized in that** the air conditioning element is part of a ceiling, wall or floor construction.

## Revendications

1. Elément de climatisation avec au moins un échangeur de chaleur (3), lequel est traversé par un fluide, avec au moins un élément de rayonnement (13, 32), entre lequel élément et l'échangeur de chaleur (3) de l'air ambiant absorbant de la chaleur/du froid circule, et avec au moins un élément thermoconducteur (14) en liaison thermoconductrice avec l'élément de rayonnement (13, 32) et au moins un tube (17), lequel est au moins partiellement recouvert par l'élément thermoconducteur (14), lequel est découplé thermiquement de l'échangeur de chaleur (3),
**caractérisé en ce que** le tube (17) est raccordé à l'échangeur de chaleur (3) et que l'élément thermoconducteur (14) est maintenu par une isolation thermique (16) dans laquelle le tube (17) est au moins partiellement encastré et laquelle est prévue sur l'arrière, tournant le dos à l'élément de rayonnement (13, 32), de l'élément thermoconducteur (14).

2. Elément de climatisation selon la revendication 1,
**caractérisé en ce que** l'élément thermoconducteur (14) presse le tube (17) contre l'élément de rayonnement (13, 32).

3. Elément de climaisation selon la revendication 1 ou 2,
**caractérisé en ce que** le tube (17) est réalisé en forme de méandres.

4. Elément de climatisation selon l'une des revendications 1 à 3,
**caractérisé en ce que** l'élément de rayonnement (13) est un revêtement de l'élément de climatisation.

5. Elément de climatisation selon l'une des revendications 1 à 3,
**caractérisé en ce que** l'élément de rayonnement (32) est un fond d'un boîtier (27) de l'élément de climatisation.

6. Elément de climatisation selon l'une des revendications 1 à 5,
**caractérisé en ce qu'**un bac d'égouttement (18) est disposé en-dessous de l'échangeur de chaleur (3).

7. Elément de climatisation selon l'une des revendications 1 à 6,
**caractérisé en ce que** l'élément de climatisation est suspendu à un mur (1).

8. Elément de climatisation selon l'une des revendications 1 à 6,
**caractérisé en ce que** l'élément de climatisation est suspendu à un plafond (25).

9. Elément de climatisation selon l'une des revendications 1 à 6,
**caractérisé en ce que** l'élément de climatisation est réalisé en tant qu'élément sur pied.

10. Elément de climatisation selon l'une des revendications 1 à 6,
**caractérisé en ce que** l'élément de climatisation est disposé dans le fond de la pièce.

11. Elément de climatisation selon l'une des revendications 1 à 6,
**caractérisé en ce que** l'élément de climatisation est un élément constitutif d'une construction de plafond, de mur ou de fond.
